# EUROPEAN PATENT APPLICATION

(11) **EP 4 557 683 A1**
(43) Date of publication of application: **21.05.2025**
(21) Application number: 23838732.8
(22) Date of filing: 30.06.2023
(51) Int. Cl.: H04L 41/0803

(54) **FUNCTION ORCHESTRATION METHOD AND APPARATUS, AND DEVICE AND STORAGE MEDIUM**

(30) Priority: 11.07.2022 CN 202210813724
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: CHEN, Jia, Beijing 100032 (CN); LU, Dongjie, Beijing 100032 (CN); ZHAO, Yuhang, Beijing 100032 (CN)
(74) Representative: Maiwald GmbH
(86) International application number: PCT/CN2023/104359
(87) International publication number: WO 2024/012240

(57) **Abstract**

Provided in the present disclosure are a function orchestration method and apparatus, and a device and a storage medium. The method comprises: acquiring a user policy, wherein the user policy represents a network function and/or a security function expected by a user, obtaining a first sequence on the basis of the user policy, and issuing the first sequence.

## Description

### CROSS-REFERENCE TO RELATED APPLICATIONS

This application claims the benefit of priority to Chinese Patent Application No. 202210813724.2, filed on July 11, 2022, the entire contents of which are incorporated herein by reference for all purposes.

### TECHNICAL FIELD

The disclosure relates to the field of wireless communication technology and, in particular to a method and an apparatus for function orchestration, a device, and a storage medium.

### BACKGROUND

Currently, a secure access service edge (SASE) service framework, which integrates wide area network (WAN) technology and comprehensive network security protection, is a new service framework that provides enterprises with cloud native networks and security services that take a center of identity, deployed in a distributed manner, and are compatible with a variety of edges. The SASE service involves in too many technologies and includes both a network function and a security function. Thus, a single vendor is unable to provide high-quality full-stack network function and security function. Although a plurality of vendors may cooperate to realize the SASE framework, the network and security needs of the user cannot be satisfied.

### SUMMARY

Based on the above, embodiments of the disclosure expect to provide a method and an apparatus for function orchestration, a device, and a storage medium.

The technical solutions of the embodiments of the disclosure are implemented as follows.

At least one embodiment of the disclosure provides a method for function orchestration. The method includes: obtaining a user strategy, in which the user strategy indicates a network function and/or a security function desired by a user; obtaining a first sequence based on the user strategy; and sending the first sequence.

Further, according to at least one embodiment of the disclosure, obtaining the first sequence includes: obtaining a first sequence that includes a network function module and/or a security function module, by analyzing the user strategy and selecting the network function module and/or the security function module.

Further, according to at least one embodiment of the disclosure, obtaining the first sequence based on the user strategy includes: obtaining the first sequence, by determining an identifier of each module in the first sequence based on at least one of: a description of a network function module, a description of a security function module, a module identifier, or a plurality of function descriptions in the user strategy; in which the function descriptions in the user strategy indicate a description of the network function desired by the user and/or a description of the security function desired by the user.

Further, according to at least one embodiment of the disclosure, the method further includes: receiving registration information sent by a plurality of function modules, in which the registration information carries at least one of: identifier information of each function module, a description of a network function supported for execution, or a description of a security function supported for execution.

Further, according to at least one embodiment of the disclosure, obtaining the first sequence based on the user strategy includes: obtaining the first sequence based on the user strategy and a preset rule.

Further, according to at least one embodiment of the disclosure, obtaining the first sequence based on the user strategy and the preset rule includes: determining a plurality of function modules, based on at least one of: a description of a network function module, a description of a security function module, a module identifier, or a plurality of function descriptions in the user strategy; and obtaining the first sequence based on the preset rule.

Further, according to at least one embodiment of the disclosure, obtaining the first sequence based on the preset rule includes: obtaining the first sequence, by selecting and/or sorting the plurality of function modules based on the preset rule.

Further, according to at least one embodiment of the disclosure, the method further includes: receiving operating state information sent by the plurality of function modules; obtaining the first sequence based on the preset rule includes: obtaining the first sequence, by selecting the plurality of function modules based on the operating state information.

Further, according to at least one embodiment of the disclosure, obtaining the first sequence based on the preset rule includes: obtaining the first sequence based on at least one of network topology, network latency, or load balancing of network traffic.

Further, according to at least one embodiment of the disclosure, obtaining the first sequence based on at least one of the network topology, the network latency, or the load balancing of network traffic includes: obtaining a source address and a destination address in the user strategy; and obtaining the first sequence based on at least one of the network topology, the network latency, or the load balancing of network traffic.

Further, according to at least one embodiment of the disclosure, the first sequence matches some or all of forwarding paths determined based on the source address and the destination address.

Further, according to at least one embodiment of the disclosure, obtaining the first sequence based on at least one of the network topology, the network latency, or the load balancing of network traffic includes: obtaining an assets address in the user strategy; and obtaining the first sequence based on at least one of the network topology, the network latency, or the load balancing of network traffic.

Further, according to at least one embodiment of the disclosure, some or all of the function modules indicated in the first sequence are function modules reachable to the assets address via a network.

Further, according to at least one embodiment of the disclosure, sending the first sequence includes: sending the first sequence and a strategy corresponding to each function module in the first sequence, in which the strategy corresponding to each function module is obtained based on the user strategy.

At least one embodiment of the disclosure provides a method for function orchestration. The method includes: receiving a first sequence; in which the first sequence is obtained based on a user strategy, the user strategy indicates a network function and/or a security function desired by a user.

Further, according to at least one embodiment of the disclosure, the method further includes: sending registration information, in which the registration information carries at least one of: identifier information of each function module, a description of a network function supported for execution, or a description of a security function supported for execution.

Further, according to at least one embodiment of the disclosure, the method further includes: sending operating state information, in which the operating state information is configured to obtain the first sequence by selecting a plurality of function modules based on the operating state information.

Further, according to at least one embodiment of the disclosure, receiving the first sequence includes: receiving the first sequence and a strategy corresponding to a function module, in which the strategy corresponding to the function module is obtained based on the user strategy.

At least one embodiment of the disclosure provides an apparatus for function orchestration. The apparatus includes: an obtaining unit, configured to obtain a user strategy; in which the user strategy indicates a network function and/or a security function desired by a user; and a processing unit, configured to obtain a first sequence based on the user strategy; and send the first sequence.

At least one embodiment of the disclosure provides an apparatus for function orchestration. The apparatus includes: a receiving unit, configured to receive a first sequence, in which the first sequence is obtained based on a user strategy, the user strategy indicates a network function and/or a security function desired by a user.

At least one embodiment of the disclosure provides a device. The device includes a processor and a memory configured to store a computer program capable of running on the processor, in which the processor is configured to perform any one of steps of the method described on device side when the computer program is executed.

At least one embodiment of the disclosure provides a device. The device includes a processor and a memory configured to store a computer program capable of running on the processor, in which the processor is configured to perform any one of steps of the method described on device side when the computer program is executed.

At least one embodiment of the disclosure provides a computer-readable storage medium. The computer-readable storage medium stores a computer program that, when executed by a processor, implements any one of steps of the method described above.

According to the method and the apparatus for function orchestration, the device, and the storage medium in the embodiments of the disclosure, a user strategy is obtained, in which the user strategy indicates a network function and/or a security function desired by a user; a first sequence is obtained based on the user strategy; and the first sequence is sent. By using the technical solutions provided in the embodiments of the disclosure, the first sequence is obtained based on the user strategy. Thus, the device receiving the first sequence may perform the corresponding network function and security function based on the first sequence, so as to provide the network and security service desired by the user, and thus satisfy the network and security needs of the user.

### BRIEF DESCRIPTION OF THE DRAWINGS

FIG. 1 is a flow chart illustrating an implementation of a method for function orchestration according to an embodiment of the disclosure.
FIG. 2 is another flow chart illustrating an implementation of a method for function orchestration according to an embodiment of the disclosure.
FIG. 3 is structural schematic diagram illustrating a system of an application of a method for function orchestration according to an embodiment of the disclosure.
FIG. 4 is a structural block diagram illustrating an apparatus for function orchestration according to an embodiment of the disclosure.
FIG. 5 is another structural block diagram illustrating an apparatus for function orchestration according to an embodiment of the disclosure.
FIG. 6 is a structural block diagram illustrating a device according to an embodiment of the disclosure.
FIG. 7 is a structural block diagram illustrating another device according to an embodiment of the disclosure.

### DETAILED DESCRIPTION

Before describing the technical solutions of embodiments of the disclosure, the related art is first described.

In the related art, enterprise cloudization and remote/mobile offices have become major trends for services under the impact of enterprise digital transformation and the COVID-19 pandemic. The changes in the network have led to a gradual blurring of security boundaries, resulting in a lack of unified security inspection for network traffic. The decentralized service deployment increases both the security cost and the operation and maintenance cost. The expansion of the uncertain security boundaries increases the exposure surface and raises the security risk. To address the above problems, Gartner proposed a secure access service edge (SASE) service framework in 2019. The SASE, which integrates wide area network (WAN) technology and comprehensive network security protection, is a new service framework that provides enterprises with cloud native networks and security services that take a center of identity, deployed in a distributed manner, and are compatible with a variety of edges. The SASE framework integrates zero-trust network access (ZTNA), firewall as a service (FWaaS), secure web gateway (SWG), cloud access security broker (CASB), data leakage prevention (DLP) and other security and network functions through a software defined WAN (software-defined wide area network, SD-WAN), thus realizing unified management and control of the network function and the security function with flexible deployment. The SASE product mainly builds full-stack network and security capabilities for a single vendor through mergers and acquisitions, technology partnerships and other ways, thus enabling orchestration and management of the network function and the security function from the same vendor.

In the related art, the SASE network and security function orchestration management framework applicable to the single vendor has the following problems. First, the SASE service involves in too many technologies and includes both the network function and the security function. Thus, a single vendor is unable to provide high-quality full-stack network function and security function. Although a plurality of vendors may cooperate to realize the SASE framework, the network and security needs of the user cannot be satisfied. The network function and the security function are not comprehensively orchestrated and managed in a unified way, which leads to a low-cost integration efficiency and requires a large amount of adaptation work. Second, the functions of the SASE service are flexibly deployed in various locations such as a point of presence (PoP), a customer premise equipment (CPE), a user equipment or a cloud, which makes it difficult for unified orchestration and management. Third, the SASE service involves in both the network function and the security function. In order to satisfy both network and security needs of the user, in consideration of the security and network forwarding efficiency, and a requirement for an order of the processing of the network function and the security function, the network function and the security function need to be orchestrated and managed in a comprehensive and orderly manner. In addition, the cross-vendor orchestration management framework mainly focuses on traffic-based security functions and realizes the processing sequence of network and security through a diversion function of the network function module. However, this approach does not provide comprehensive orchestration and unified management for the network function and the security function.

Based on the above, in embodiments of the disclosure, a user policy is obtained. The user strategy indicates a network function and/or a security function desired by a user. A first sequence is obtained based on the user strategy. The first sequence is sent.

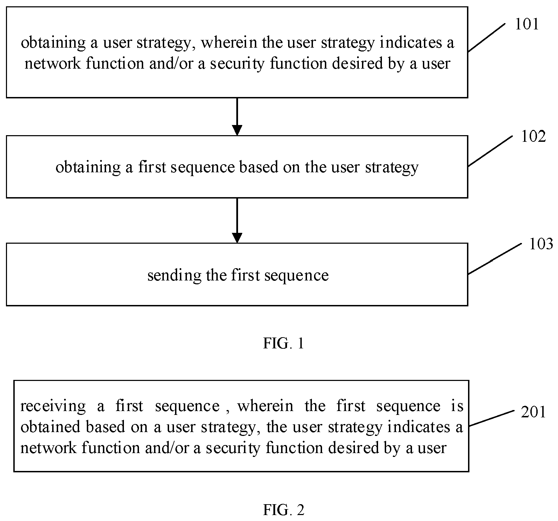

FIG. 1 is a flow chart illustrating an implementation of a method for function orchestration according to an embodiment of the disclosure, applied to a server. As shown in FIG. 1, the method includes the following steps 101 to 103.

At step 101: a user strategy is obtained; in which the user strategy indicates a network function and/or a security function desired by a user.

It may be understood that in embodiments of the disclosure, the method may be applied in a SASE service architecture. The server may specifically refer to an orchestration layer in the SASE service architecture.

It may be understood that the user strategy may refer to a requirement description of the network function and the security function desired by the user. The user strategy typically includes the requirement description of the network function and the security function such as a source address and a destination address of user traffic, a service quality requirement, an access control condition, an assets address, and etc.

It may be understood that a basic format of the user strategy may be expressed using a tag language that may be nested, such as an extensible markup language (xml), a javascript object notation (json), and etc. Taking xml as an example, a basic composition of the user strategy is <tag>value</tag>.

It may be understood that the types of the user strategy may include two types.

The first type of the user strategy is a traffic-oriented user strategy.

Table 1 is a schematic illustration of a basic format of the traffic-oriented user strategy. As shown in Table 1, the traffic-oriented user strategy mainly includes a source address, a destination address, and a requirement for the security function or the network function.

**Table 1**

| basic format of the traffic-oriented user strategy |
|---|
| <SourceAddress>source address IP: port</SourceAddress> |
| <DestinationAddress>destination address IP: port</DestinationAddress> |
| <protocol type>protocol type</protocol type> |
| <NetworkStrategy>...</NetworkStrategy> |
| <SecurityStrategy>...</SecurityStrategy> |

In Table 1, the term IP refers to an internet protocol, which may be understood as an IP address. The source address IP may also be described as a source IP address. The destination address IP may also be described as a destination IP address.

The second type of the user strategy is a non-traffic-oriented user strategy.

Table 2 is a schematic illustration of a basic format of the non-traffic oriented user strategy. As shown in Table 2, the non-traffic oriented user strategy mainly includes a destination address, and a requirement for the security function or the network function.

**Table 2**

| basic format of the non-traffic oriented user strategy |
|---|
| <AssetsAddress>assets address IP: port</AssetsAddress> |
| <NetworkStrategy>...</NetworkStrategy> |
| <SecurityStrategy>...</SecurityStrategy> |

It should be noted that, in Table 1 and Table 2, values corresponding to all address-type tags may be configured to represent a plurality of addresses using regular expressions, wildcards, or address base names (i.e., designating an already-existing address base as a source address, a destination address, or an assets address by a name), and etc. <NetworkStrategy>...</NetworkStrategy> in Table 1 and Table 2 include a function strategy corresponding to a desired network function tag. <SecurityStrategy>...</SecurityStrategy> in Table 1 and Table 2 include a function strategy corresponding to a desired security function tag. The details are shown in Table 3.

**Table 3**

| |
|---|
| <function tag 1>function strategy...</function tag 1> |
| <function tag2>function strategy...</function tag 2> |
| ... |
| <function tag n>function strategy...</function tag n> |

As shown in Table 3, the function tag may refer to a name of each network function or security function. In the traffic-oriented user strategy, the function tag that indicates the security function includes, but is not limited to, traffic encryption (Encryption), traffic filter (Filter), and identity and access management (IAM); the function tag that indicates the network function includes, but is not limited to, deep packet inspection (DPI), network optimization, traffic isolation, and etc. In the non-traffic-oriented user strategy, the function tag that indicates the security function includes, but is not limited to, resource discovery, vulnerability scan, log review, and etc. The function strategy is a strategy configuration of a corresponding security function. For example, a Filter tag value may include a filtering condition, and a processing method after the filtering.

Table 4 is a schematic illustration of the function strategies corresponding to the function tags. As shown in Table 4, one function tag may include a plurality of function strategies.

**Table 4**

| |
|---|
| <function tag 1> |
| <function strategy 1>...</function strategy 1> |
| <function strategy 2>...</function strategy 2> |
| .... |
| <function strategy n>...</function strategy n> |
| </function tag 1> |

At step 102: a first sequence is obtained based on the user strategy.

In this case, "obtained/obtaining" may be understood that the first sequence is obtained by construction/generation of the server on its own, or is obtained from other devices or modules.

In this case, obtaining the first sequence includes: obtaining a first sequence that includes a network function module and/or a security function module, by analyzing the user strategy and selecting the network function module and/or the security function module.

The first sequence may include only the network function module and/or the security function module, but may also include other modules.

The deployment locations of the network function module and the security function module are not limited. For example, the network function module and the security function module may be deployed in a location such as a PoP, a CPE, a gateway, a user equipment, a cloud, a cloud server, an SD-WAN/software-defined networking (SDN) controller, a network device, and etc.

The function module obtains the first sequence.

The function descriptions in the user strategy indicate a description of the network function desired by the user and/or a description of the security function desired by the user.

The descriptions may take various forms, such as a function tag, etc. The descriptions herein may describe a content of the function, a type of the function, and other attributes of the function.

Each module in the first sequence is actually a module capable of satisfying the network function/security function desired by the user. The network function module and the security function module have corresponding module identifiers. The identifiers of function modules to be orchestrated in the first sequence are determined based on a correspondence between function modules and module identifiers, after determining which network/security function modules are capable of satisfying the desires of the user. It may be understood that the first sequence actually includes an identifier sequence of the network function modules and/or the security function modules satisfying the desires of the user.

As an implementation, obtaining the first sequence based on the user strategy may include: reading a plurality of function tags in the user strategy; in which each function tag indicates a type of a network function desired by the user or a type of a security function desired by the user; obtaining a plurality of module identifiers by determining a module identifier corresponding to each function tag using the plurality of function tags based on a preset correspondence between types of network function modules, types of security function modules, and module identifiers; and generating the first sequence based on the plurality of function tags and the plurality of module identifiers.

As another implementation, obtaining the first sequence based on the user strategy may include: reading a plurality of function tags in the user strategy; in which each function tag indicates a type of a network function desired by the user or a type of a security function desired by the user; obtaining a plurality of function module identifiers by determining a function module identifier corresponding to each function tag using the plurality of function tags based on a preset correspondence between types of network function modules, types of security function modules, and function module identifiers; and generating the first sequence based on the plurality of function tags and the plurality of function module identifiers.

In particular, the following steps may be included.

At step 1: the plurality of function tags in the user strategy are read.

In particular, all function tags in the security strategy and the network strategy of the user strategy are summarized. In this case, the summarized result is assumed to be {DPI, Filter, Encryption}.

At step 2: a plurality of function module identifiers are obtained by determining a function module identifier corresponding to each function tag using the plurality of function tags based on a preset correspondence between types of network function modules, types of security function modules, and function module identifiers.

Table 5 is a schematic illustration of the preset correspondence between types of network function modules, types of security function modules, and function module identifiers. As shown in Table 5, the function module identifier corresponding to each function tag may be searched based on a name of the network function or the security function described by the function tag in combination with the preset correspondence. For example, it is assumed that there are two function tags, where one function tag describes the network function DPI, and the other function tag describes a security function Filter, a function module ID1 and a function module ID3 are then obtained by searching for a function module identifier corresponding to DPI, and a function module ID2 and a function module ID3 are then obtained by searching for a function module identifier corresponding to Filter, from the preset correspondence.

**Table 5**

| types of network function modules | types of security function modules | function module identifiers |
|---|---|---|
| DPI | none | function moduleID1 |
| none | Filter | function moduleID2 |
| DPI | Filter | function moduleID3 |

It should be noted that if no function module identifier corresponding to the corresponding function tag is searched from the preset correspondence, the function tag is deleted.

At step 3: the first sequence is generated based on the plurality of function tags and the plurality of function module identifiers.

In this case, it is assumed that there are three function tags, one of which describes the network function DPI, the two of which respectively describe the security function Filter and the security function Encryption, and it is assumed that a function module ID1 and a function module ID3 are obtained by searching for a function module identifier corresponding to DPI, a function module ID2 and a function module ID3 are obtained by searching for a function module identifier corresponding to Filter, and a function module ID3 is obtained by searching for a function module identifier corresponding to Encryption, from the preset correspondence, then the obtained first sequence may be represented as: [(DPI, function module ID1, function module ID3), (Filter, function module ID2, function module ID3, (Encryption, function module ID3)].

It should be noted that the function module identifier may also be replaced with the identifier of the network function module and/or the identifier of the security function module set in the function module.

That is, it is assumed that the function module identifier is the function module ID1, then the identifier of the network function module set in the function module may be indicated by the network function module ID1, and the identifier of the security function module set in the function module may be indicated by the security function module ID1. In this manner, it is assumed that the function module identifier is the function module ID2, then the identifier of the network function module set in the function module may be indicated by the network function module ID2, and the identifier of the security function module set in the function module may be indicated by the security function module ID2. It is assumed that the function module identifier is the function module ID3, then the identifier of the network function module set in the function module may be indicated by the network function module ID3, and the identifier of the security function module set in the function module may be indicated by the security function module ID3. Thus, the obtained first sequence may also be represented as: [(DPI, network function module ID1, network function module ID3), (Filter, security function module ID2, security function module ID3), (Encryption, security function module ID3)].

In an embodiment, the method further includes: receiving registration information sent by a plurality of function modules, in which the registration information carries at least one of: identifier information of each function module, a description of a network function supported for execution, or a description of a security function supported for execution.

In this case, the orchestration layer may obtain, based on the registration information, a preset correspondence between descriptions of network functions, descriptions of security functions, and identifiers of corresponding network function modules, which is subsequently configured to perform the orchestration of the function modules. The description of the function module may also include other contents, such as a name, an address, a calling interface, a deployment type, etc.

In an embodiment, the method further includes: receiving registration information sent by each of a plurality of function modules, in which the registration information carries identifier information of each function module, a description of a network function supported for execution, and a description of a security function supported for execution; and obtaining, based on the registration information, a preset correspondence between descriptions of network functions, descriptions of security functions, and identifiers of corresponding network function modules.

For example, it is assumed that there are three function modules, a function module identifier reported by a function module 1 is ID1, and the type of network function supported for execution is DPI (which does not support the security function for execution); a function module identifier reported by a function module 2 is ID2, and the type of security function supported for execution is Filter (which does not support the network function for execution); a function module identifier reported by a function module 3 is ID3, and the type of network function supported for execution is DPI, and the type of security function supported for execution is Filter. In this way, the server may obtain the preset correspondence between types of network function modules, types of security function modules, and module identifiers based on the registration information reported by each function module.

In a second case, the first sequence is obtained using the user strategy and the preset rule.

In practical application, considering that the SASE service involves in both the network function and the security function, in order to satisfy requirements of the user for both the network function and the security function, in consideration of the security and network forwarding efficiency, function modules for executing the network function and the security function desired by the user need to be orchestrated and managed in a comprehensive and orderly manner. In the orchestration process, in addition to considering information such as a network service requirement of the user, a network topology, a network operating state, etc., the security function may also be orchestrated into a route/path as a network node that must be passed through in the forwarding process according to a security service requirement of the user.

Based on the above, in an embodiment, obtaining the first sequence based on the user strategy includes: obtaining the first sequence based on the user strategy and a preset rule.

In this case, the "rule" may also be referred to as a strategy, a principle, and etc.

In an embodiment, obtaining the first sequence based on the user strategy and the preset rule includes: determining a plurality of function modules, based on at least one of: a description of a network function module, a description of a security function module, a module identifier, or a plurality of function descriptions in the user strategy; and obtaining the first sequence based on the preset rule.

The preset rule may include both a rule that indicates selecting of function module(s) and a rule that indicates sorting of the function modules, or may include only one of them.

The function descriptions in the user strategy indicate a description of the network function desired by the user and/or a description of the security function desired by the user.

In this case, the description may take various forms, such as a function tag, etc. The description may describe the content of the function, the type of the function, and other attributes of the function.

In an embodiment, obtaining the first sequence based on the preset rule includes: obtaining the first sequence, by selecting and/or sorting the plurality of function modules based on the preset rule.

The selecting and the sorting of the plurality of function modules has no necessary order in time. In the process of obtaining the first sequence, both the selecting and sorting also do not have to occur.

In this case, one implementation for selecting function module(s) is as follows. An optimal function module may be selected from a plurality of network/security function modules that satisfy the desires of the user. For example, the function module is selected based on attributes such as an operating state of each function module, whether the function module is deployed close to a user side and/or close to a resource side, whether the function module satisfies a heavy computing function requirement, whether the function module satisfies a medium computing function requirement, whether the function module satisfies a light computing function requirement, and etc. It should be noted that the optimal function module is not limited to one function module, but there may be a plurality of optimal function modules. The selecting of the function modules may include the selecting of the network function modules and/or the selecting of the security function modules. In some cases, only one function module need to be selected, and in some cases both function modules need to be selected.

In this case, one implementation for sorting function modules is to sort the function modules based on specific requirements, such as a plurality of function modules having a particular order of execution. The sorting of the function modules may include sorting of the network function modules and/or sorting of the security function modules. In some cases, only one type of function modules may need to be sorted, and in some cases both types of function modules need to be sorted. The sorting may be performed separately. For example, a plurality of network function modules may be sorted and a plurality of security function modules may be sorted, but the two function modules are not mixed in the sorting; or the two function modules may be mixed in the sorting.

When the first sequence needs more than two function modules to be selected and/or sorted, the selecting and/or sorting method is similar to the selecting and/or sorting method described above and will not be repeated herein.

In particular, obtaining the first sequence based on the user strategy and the preset rule includes: reading a plurality of function tags in the user strategy, in which each function tag indicates a type of a network function desired by the user or a type of a security function desired by the user; obtaining a plurality of first function module identifiers by determining a first function module identifier corresponding to each function tag using the plurality of function tags based on a preset correspondence between types of network function modules, types of security function modules, and function module identifiers; selecting at least one second function module identifier satisfying the preset rule from the plurality of first function module identifiers corresponding to each function tag; and obtaining the first sequence based on the plurality of function tags and at least one second function module identifier corresponding to each function tag.

In this case, the preset rule may refer to a rule that the function module needs to satisfy, which may specifically include one of: being deployed close to a user side; being deployed close to a resource side; satisfying a heavy computing function requirement; satisfying a medium computing function requirement; or satisfying a light computing function requirement.

In this case, "being deployed close to the user side" refers to a fact that the function module needs to be deployed close to an access entity. A function module needs to be selected that is deployed in a function resource pool that is close to/vicinity of the access POP, or a CPE and vicinity of the access POP. "being deployed close to the resource side" refers to a fact that the function module needs to be deployed close to a service application or a target resource. A function module needs to be selected that is deployed in a security resource pool close to the service application or the target resource. The heavy computing function requirement refers to a fact that the function module should be deployed centrally in a large function resource pool. A function module needs to be selected that is deployed in the large function resource pool along a forwarding path of user network traffic, and the plurality of security function modules desired by the user should be deployed in the large resource pool in priority, so as to reduce the forwarding latency. The light computing function requirement refers to a fact that a function module deployed on the user side may be selected. The medium computing function requirement is a requirement between the heavy computing function requirement and the light computing function requirement.

That is, the function modules may be deployed based on the deployment location, for example, a deployment location close to the user side (e.g., SWG), a deployment location close to the resource side (e.g., CASB, and all non-traffic-based security functions such as vulnerability scanning), or a deployment location without requirements (e.g., firewall). The function modules may be deployed based on the required computing function, such as, satisfying the heavy computing function requirement; satisfying the medium computing function requirement; or satisfying the light computing function requirement.

In particular, obtaining the first sequence based on the user strategy and the preset rule may include the following steps.

At step 1: the plurality of function tags in the user strategy are read.

In particular, all function tags in the security strategy and the network strategy of the user strategy are summarized.

In this case, the summarized result is assumed to be {DPI, Filter, Encryption}.

At step 2: the plurality of first function module identifiers are obtained by determining a first function module identifier corresponding to each function tag using the plurality of function tags based on a preset correspondence between types of network function modules, the types of security function modules, and module identifiers.

For example, it is assumed that there are two function tags, one of which describes the network function DPI, the other of which describes a security function Filter, a function module ID1 and a function module ID3 are then obtained by searching for a first function module identifier corresponding to DPI, and a function module ID2 and a function module ID3 are then obtained by searching for a first function module identifier corresponding to Filter, from the preset correspondence.

It should be noted that if no first function module identifier corresponding to the corresponding function tag is searched from the preset correspondence, the function tag is deleted.

At step 3: at least one second function module identifier satisfying the preset rule is selected from the plurality of first function module identifiers corresponding to each function tag.

For example, it is assumed that the preset rule is that the function module is deployed close to the user side, and it is assumed that there are two function tags, where one function tag describes the network function DPI, and the other function tag describes the security function Filter, then a function module ID1 and a function module ID3 are then obtained by searching for a first function module identifier corresponding to DPI, from the preset correspondence, a function module identifier of a function module deployed close to the user side is selected from the function module ID1 and the function module ID3. It is assumed that the function module 1 is deployed close to the user side, the identifier ID1 of the function module 1 is obtained. A function module ID2 and a function module ID3 are then obtained by searching for a first function module identifier corresponding to Filter. A function module identifier of a function module deployed close to the user side is selected from the function module ID2 and the function module ID3. It is assumed that the function module 3 is deployed close to the user side, the identifier ID3 of the function module 3 is obtained.

At step 4: the first sequence is obtained based on the plurality of function tags and at least one second function module identifier corresponding to each function tag.

In this case, it is assumed that there are three function tags, one of which describes the network function DPI, the two of which respectively describe the security function Filter and the security function Encryption, and it is assumed that each second function module identifier corresponding to each function tag is the function module ID1, the function module ID3, the function module ID3, the obtained first sequence may be: [(DPI, function module ID), (Filter, function module ID3), (Encryption, function module ID3)].

It should be noted that the function module identifier may also be replaced with the identifier of the network function module and/or the identifier of the security function module set in the function module.

That is, it is assumed that the function module identifier is the function module ID1, then the identifier of the network function module set in the function module may be indicated by the network function module ID1, and the identifier of the security function module set in the function module may be indicated by the security function module ID1. In this manner, it is assumed that the function module identifier is the function module ID2, then the identifier of the network function module set in the function module may be indicated by the network function module ID2, and the identifier of the security function module set in the function module may be indicated by the security function module ID2. It is assumed that the function module identifier is the function module ID3, then the identifier of the network function module set in the function module may be indicated by the network function module ID3, and the identifier of the security function module set in the function module may be indicated by the security function module ID3. Thus, the obtained first sequence may also be represented as: [(DPI, network function module ID1), (Filter, security function module ID3), (Encryption, security function module ID3)].

In a third case, the first sequence is obtained using the user strategy, and operating state information of each function module.

In practical application, considering that the SASE service involves in both the network function and the security function, in order to satisfy requirements of the user for both the network function and the security function, in consideration of the security and network forwarding efficiency, function modules for executing the network function and the security function desired by the user need to be orchestrated and managed in a comprehensive and orderly manner. In the orchestration process, the operating state of the function module may also be considered.

Based on the above, in an embodiment, the method further includes: receiving operating state information sent by the plurality of function modules; obtaining the first sequence based on the preset rule includes: obtaining the first sequence, by selecting the plurality of function modules based on the operating state information.

It may be understood that the operating state information may include information such as logs, alarms, etc., for indicating whether the function module is in normal operating.

In an embodiment, obtaining the first sequence based on the user strategy and the operating state information includes: reading a plurality of function tags in the user strategy, in which each function tag indicates a type of a network function desired by the user or a type of a security function desired by the user; obtaining a plurality of third function module identifiers by determining a third function module identifier corresponding to each function tag using the plurality of function tags based on a preset correspondence between types of network function modules, types of security function modules, and function module identifiers; selecting, based on the operating state information, at least one fourth function module identifier satisfying the preset condition from the plurality of third function module identifiers corresponding to each function tag; and generating the first sequence based on the plurality of function tags and at least one fourth function module identifier corresponding to each function tag.

In this case, satisfying the preset condition may refer to a fact that the operating state of the function module is normal.

In particular, obtaining the first sequence based on the user strategy and the operating state information may include the following steps.

At step 1: the plurality of function tags in the user strategy are read.

In particular, all function tags in the security strategy and the network strategy of the user strategy are summarized.

In this case, the summarized result is assumed to be {DPI, Filter, Encryption}.

At step 2: the plurality of third function module identifiers are obtained by determining a third function module identifier corresponding to each function tag using the plurality of function tags based on a preset correspondence between types of network function modules, types of security function modules, and module identifiers.

For example, it is assumed there are two function tags, one of which describes the network function DPI, the other of which describes a security function Filter, a function module ID1 and a function module ID3 are then obtained by searching for a first function module identifier corresponding to DPI from the preset correspondence, and a function module ID2 and a function module ID3 are then obtained by searching a first function module identifier corresponding to Filter, from the preset correspondence.

It should be noted that if no first function module identifier corresponding to the corresponding function tag is searched from the preset correspondence, the function tag is deleted.

At step 3: at least one fourth function module identifier satisfying the preset condition is selected from the plurality of third function module identifiers corresponding to each function tag based on the operating state information.

For example, it is assumed there are two function tags, one of which describes the network function DPI, the other of which describes the security function Filter, a function module ID1 and a function module ID3 are then obtained by searching for a first function module identifier corresponding to DPI, from the preset correspondence. A function module identifier of a function module with a normal operating state is selected from the function module ID1 and the function module ID3. It is assumed that the function module 1 has a normal operating state, the identifier ID1 of the function module 1 is obtained. A function module ID2 and a function module ID3 are then obtained by searching for a first function module identifier corresponding to Filter. A function module identifier of a function module with a normal operating state is selected from the function module ID2 and the function module ID3. It is assumed that the function module 3 has a normal operating state, the identifier ID3 of the function module 3 is obtained.

At step 4: the first sequence is obtained based on the plurality of function tags and at least one fourth function module identifier corresponding to each function tag.

In this case, it is assumed that there are three function tags, one of which describes the network function DPI, the two of which respectively describe the security function Filter and the security function Encryption, and it is assumed that each fourth function module identifier corresponding to each function tag is the function module ID1, the function module ID3, the function module ID3, the obtained first sequence may be: [(DPI, function module ID1), (Filter, function module ID3), (Encryption, function module ID3)].

It should be noted that the function module identifier may also be replaced with the identifier of the network function module and/or the identifier of the security function module set in the function module.

That is, it is assumed that the function module identifier is the function module ID1, then the identifier of the network function module set in the function module may be indicated by the network function module ID1, and the identifier of the security function module set in the function module may be indicated by the security function module ID1. In this manner, it is assumed that the function module identifier is the function module ID2, then the identifier of the network function module set in the function module may be indicated by the network function module ID2, and the identifier of the security function module set in the function module may be indicated by the security function module ID2. It is assumed that the function module identifier is the function module ID3, then the identifier of the network function module set in the function module may be indicated by the network function module ID3, and the identifier of the security function module set in the function module may be indicated by the security function module ID3. Thus, the obtained first sequence may also be represented as: [(DPI, network function module ID1), (Filter, security function module ID3), (Encryption, security function module ID3)].

In an embodiment, obtaining the first sequence based on the preset rule includes: obtaining the first sequence based on at least one of network topology, network latency, or load balancing of network traffic.

In an embodiment, obtaining the first sequence based on at least one of the network topology, the network latency, or the load balancing of network traffic includes: obtaining a source address and a destination address in the user strategy; and obtaining the first sequence based on at least one of the network topology, the network latency, or the load balancing of network traffic.

In this case, including the source address and the destination address in the user strategy indicates that the user strategy is a traffic-oriented user strategy.

In an embodiment, the first sequence matches some or all of forwarding paths determined based on the source address and the destination address.

In this case, the first sequence actually indicates a plurality of function modules, not only indicating which function modules are included, but also indicating the order of the plurality of function modules. The first sequence may also be interpreted as a forwarding path. When the first sequence is sent to each function module, each function module may perform traffic forwarding based on the function modules and the order of the function modules indicated in the first sequence. When the source address and the destination address are included in the user strategy, it indicates that the user strategy is the traffic-oriented user strategy, i.e., the traffic needs to be processed by the appropriate network/security functions. The first sequence actually specifies which network/security function modules are involved in processing the traffic. While the traffic is forwarded by the network/security function module specified in the first sequence, the traffic may also be processed by the corresponding network/security function module. Thus, the function module(s) indicated in the first sequence matches the forwarding path determined based on the source address and the destination address. For example, the function module(s) may fully match one of the forwarding paths. That is, an address of a device where the first function module is deployed in the first sequence is the same as the source address, and an address of a device where the last function module is deployed in the first sequence is the same as the destination address. Alternatively, an address of the device where the first function module is deployed in the first sequence is the same as the source address, but an address of the device where the last function module is deployed in the first sequence is different from the destination address, and the address of the device where the last function module is deployed is the same as an address of an intermediate node in the path. Alternatively, an address of the device where the first function module is deployed in the first sequence is different from the source address, but an address of the device where the first function module is deployed is the same as an address of an intermediate node in the path, and an address of the device where the last function module is deployed in the first sequence is the same as the destination address. Alternatively, an address of the device where the first function module is deployed in the first sequence is different from the source address, and an address of the device where the last function module is deployed in the first sequence is different from the destination address.

In an embodiment, obtaining the first sequence based on at least one of the network topology, the network latency, or the load balancing of network traffic includes: obtaining an assets address in the user strategy; and obtaining the first sequence based on at least one of the network topology, the network latency, or the load balancing of network traffic.

In this case, including only the destination address in the user strategy indicates that the user strategy is a non-traffic-oriented user strategy.

In an embodiment, some or all of the function modules indicated in the first sequence are function modules reachable to the assets address via a network.

In this case, some or all of the function modules indicated in the first sequence are capable of establishing a pathway with the destination address, enabling the function modules to perform the corresponding network/security processing for the objects (e.g., resources, etc.) indicated by the assets address.

In practical application, considering that it is desired by the user during the process of forwarding user traffic that, the user traffic is forwarded in an orderly manner through function modules with the network function and the security function, a first sequence that indicates an execution order of the functions may be generated.

Based on the above, in an embodiment, the method further includes: determining a type of the user strategy; and when it is determined that the type of the user strategy is a first preset type, obtaining the first sequence based on the user strategy, in which the first sequence carries order information of the plurality of function modules performing the network function and the security function desired by the user.

In practical application, considering that it is desired by the user during the process of forwarding user traffic that, the function modules with the network function and the security function do not need to forward the user traffic in an orderly manner, a first sequence that does not indicate an execution order of the functions may be generated.

Based on the above, in an embodiment, the method further includes: when it is determined that the type of the user strategy is a second preset type; obtaining the first sequence based on the user strategy, in which the first sequence does not carry the order information of the plurality of function modules performing the network function and the security function desired by the user.

In an embodiment, determining the type of the user strategy includes: determining whether the user strategy includes a preset content; when it is determined that the user strategy includes the preset content, determining that the type of the user strategy is the first preset type; and when it is determined that the user strategy does not include the preset content, determining that the type of the user strategy is the second preset type.

It may be understood that determining whether the user strategy includes the preset content may refer to determining whether the user strategy includes both a source address tag and a destination address tag. If the user strategy includes both the source address tag and the destination address tag, it is determined that the type of the user strategy is the first preset type. If the user strategy includes only the destination address tag, it is determined that the type of the user strategy is the second preset type.

In this case, the first preset type may refer to the user strategy being a traffic-oriented user strategy, the second preset type may refer to the user strategy being a non-traffic-oriented user strategy.

In this case, when it is determined that the type of the user strategy is the first preset type, the first sequence is obtained based on the user strategy. The first sequence carries the order information of the plurality of function modules performing the network function and the security function desired by the user.

In this case, the first sequence that carries the order information may be: [{(DPI, function module identifier), (Filter, function module identifier)}, (Encryption, function module identifier)].

The elements in the symbol [] should be executed strictly in the order, i.e., the functions involving in a message content, such as the DPI corresponding to the security function and the Filter corresponding to the network function, should be executed before the Encryption corresponding to the security function. The part in the symbol {} is not related to the order, i.e., the functions involving in the message content, such as DPI corresponding to the security function and Filter corresponding to the network function, are executed without any order. The part in () includes the type of the network function or security function, followed by a specific function module identifier.

It should be noted that the function module identifier may also be replaced with the identifier of the network function module and/or the identifier of the security function module set in the function module.

That is, the first sequence that carries the order information may also be: [{(DPI, function module ID), (Filter, function module ID)}, (Encryption, function module ID)].

When it is determined that the type of the user strategy is the second preset type, the first sequence is obtained based on the user strategy. The first sequence does not carry the order information of the plurality of function modules performing the network function and the security function desired by the user.

In this case, the first sequence that does not carry the order information may be: [{(DPI, function module identifier), (Filter, function module identifier)}, (Encryption, function module identifier)].

At step 103: the first sequence is sent.

In this case, "sending the first sequence" may be implemented in a plurality of ways. The first sequence may be sent to all function modules, or the first sequence may be sent to a part of the function modules. A part of the first sequence may be sent to all function modules, or a part of the first sequence may be sent to a part of the modules. The same first sequence or different first sequences may be sent to different function modules, i.e., only the sequence that each function module should know may be sent to the corresponding function module, without knowing the other parts of the sequence.

In an embodiment, sending the first sequence includes: sending the first sequence and a strategy corresponding to each function module in the first sequence, in which the strategy corresponding to each function module is obtained based on the user strategy.

It may be understood that the plurality of function modules perform the security functions and the network functions desired by the user based on the first sequence, thus realizing the unified orchestration and management of the plurality of function modules based on the requirements of the user, and then satisfying the network and security requirements of the user.

In practical application, for the user strategy carrying a source node and a destination node, i.e., the user strategy of the first preset type, a plurality of first forwarding paths may be determined based on the source node and the destination node. At least one second forwarding path passing through the plurality of function modules is selected from the plurality of first forwarding paths. Information related to the at least one second forwarding path is sent to the plurality of function modules respectively. Thus, the plurality of function modules may achieve orderly forwarding of user traffic, in combination with the at least one second forwarding path and the first sequence.

Based on the above, in an embodiment, the method further includes: reading the source node and the destination node in the user strategy; determining the plurality of first forwarding paths based on the source node and the destination node; selecting the at least one second forwarding path passing through the plurality of function modules from the plurality of first forwarding paths; and sending the information related to the at least one second forwarding path to the plurality of function modules respectively, so that user traffic is forwarded by the plurality of function modules.

It should be noted that for the user strategy that does not carry the source node and the destination node, i.e., the user strategy of the second preset type, a forwarding path does not need to be determined. That is, each function module independently accesses a resource based on the first sequence, and performs a corresponding function on the accessed resource without the need of forwarding.

The embodiments of the disclosure have the following advantages.

(1) The first sequence is obtained based on the user strategy. The device that receives the first sequence may execute the corresponding network function and the security function based on the first sequence, so as to provide the network and security services desired by the user. In this way, the network and security requirements of the user are satisfied, and the compatibility of the network function and the security function of the plurality of vendors and various deployment locations may be satisfied, so as to more flexibly address the network and security requirements.

(2) The unified orchestration and management of the network function and the security function across vendors and network domains forms an ordered first sequence, so that user traffic is forwarded in an orderly manner through the ordered first sequence.

(3) The unified orchestration and management of the network function and the security function across vendors and network domains forms an unordered first sequence, so that the resource is processed through the unordered first sequence.

FIG. 2 is another flow chart illustrating an implementation of a method for function orchestration according to an embodiment of the disclosure, applied to a function module. As shown in FIG. 2, the method includes step 201.

At step 201: the first sequence is received, in which the first sequence is obtained based on a user strategy, and the user strategy indicates a network function and/or a security function desired by a user.

In an embodiment, the method further includes sending registration information, in which the registration information carries at least one of: identifier information of each function module, a description of a network function supported for execution, or a description of a security function supported for execution.

In an embodiment, the method further includes sending operating state information, in which the operating state information is configured to obtain the first sequence by selecting a plurality of function modules based on the operating state information.

In an embodiment, receiving the first sequence includes: receiving the first sequence and a strategy corresponding to a function module, in which the strategy corresponding to function module is obtained based on the user strategy.

The strategy corresponding to the function module may include only the strategy corresponding to the function module, or may include not only the strategy corresponding to the function module but also strategies corresponding to other function modules, or may include only the strategies corresponding to other function modules.

It may be understood that the function module performs the security function and the network function desired by the user based on the first sequence, thus realizing the unified orchestration and management of the plurality of function modules based on the requirements of the user, and then satisfying the network and security requirements of the user.

In practical application, for the user strategy carrying a source node and a destination node, i.e., the user strategy of the first preset type, a plurality of first forwarding paths may be determined based on the source node and the destination node. At least one second forwarding path passing through the plurality of function modules is selected from the plurality of first forwarding paths. Information related to the at least one second forwarding path is sent to the plurality of function modules respectively. Thus, the plurality of function modules may achieve orderly forwarding of user traffic, in combination with the at least one second forwarding path and the first sequence.

Based on the above, in an embodiment, the method further includes: receiving the information related to the at least one second forwarding path, in which the at least one second forwarding path is obtained by the following steps of the server: reading the source node and the destination node in the user strategy, determining the plurality of first forwarding paths based on the source node and the destination node, and selecting the at least one second forwarding path passing through the plurality of function modules from the plurality of first forwarding paths.

It should be noted that for the user strategy that does not carry the source node and the destination node, i.e., the user strategy of the second preset type, a forwarding path does not need to be determined. That is, each function module independently accesses a resource based on the first sequence, and performs a corresponding function on the accessed resource without the need of forwarding.

The embodiments of the disclosure have the following advantages.
(1) The first sequence is constructed based on the user strategy. The plurality of function modules may execute the corresponding network function and the security function based on the first sequence, so as to provide the network and security services desired by the user. In this way, the network and security requirements of the user are satisfied, and the compatibility of the network function and the security function of the plurality of vendors and various deployment locations may be satisfied, so as to more flexibly address the network and security requirements.
(2) The unified orchestration and management of the network function and the security function across vendors and network domains forms an ordered first sequence, so that user traffic is forwarded in an orderly manner through the ordered first sequence.
(3) The unified orchestration and management of the network function and the security function across vendors and network domains forms an unordered first sequence, so that the resource is processed through the unordered first sequence.

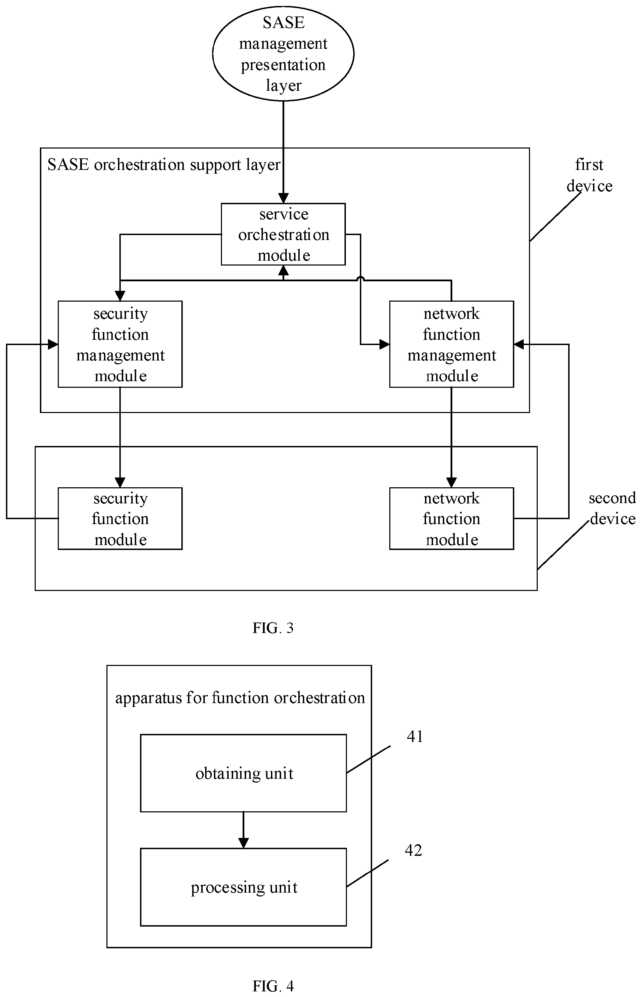

FIG. 3 is an architecture diagram illustrating a system where a method for function orchestration is applied according to an embodiment of the disclosure. As shown in FIG. 3, the system includes a first device and a second device.

The first device is configured to obtain the user strategy, in which the user strategy indicates the network function and/or the security function desired by a user; obtain the first sequence based on the user strategy; and send the first sequence.

The second device is configured to receive the first sequence.

It should be noted that in a SASE application scenario, the system may further include an SASE management presentation layer. The first device may specifically refer to an SASE orchestration support layer. The second device may specifically refer to a function module, a virtual machine, a container, and etc.

The SASE management presentation layer is configured to collect the user strategy via a user interface (UI) or a configuration file, etc., and send the user strategy to the SASE orchestration support layer. The user strategy may refer to a requirement description of the network function and the security function desired by the user. The user strategy typically includes the requirement description of the network function and the security function such as a source address and a destination address of user traffic, a service quality requirement, an access control condition, an assets address, and etc.

The SASE orchestration support layer is configured to analyze the user strategy and construct and orchestrate the first sequence. In particular, the SASE orchestration support layer may include: a service orchestration module, a security function management module, and a network function management module. The service orchestration module is configured to analyze the user strategy, construct the first sequence, and send the first sequence to the security function management module and the network function management module. The security function management module and the network function management module are configured to send the first sequence to a security function module or a network function module in the corresponding function module; obtain registration information, operating state information, and a result of executing the first sequence, which are sent by each function module, and report the information and the result to the service orchestration module. The registration information includes at least following contents of a security function and/or network function governed by the function module: a type, an operating state, a function module ID, a name, a description of its own function, an ID, a name, an address, a calling interface, a deployment type, and etc. The operating state information includes at least information of the function module such as logs, alarms, etc. The function module may specifically be a PoP, a CPE, an SD-WAN/SDN controller, a virtual machine, a container, and the like. The deployment type includes, but is not limited to, physical deployment, cloudization, or virtual deployment.

In this case, the function module is configured to receive the first sequence and execute the network function and the security function desired by the user. The function module may specifically include: a security function module and a network function module. The security function module is configured to receive the first sequence, execute the security function desired by the user; send the registration information and the operating state information, and feed back the result of executing the first sequence, and the like. The network function module is configured to receive the first sequence, execute the network function desired by the user; send the registration information and the operating state information, and feed back the result of executing the first sequence, and the like.

In this case, the security function module may specifically include a traffic-oriented security function module and a non-traffic-oriented security function module.

The traffic-oriented security function module refers to the security function module with a traffic forwarding function, which is capable of realizing the forwarding of user traffic based on the first sequence. The processing object of the security function module is the user traffic. The network function module is required to divert the user traffic to complete the security processing.

The non-traffic-oriented security function module refers to the security function module without a traffic forwarding function, which is capable of accessing a resource based on the first sequence and performing a corresponding security function on the resource. The processing object of the security function module is non-traffic, i.e., the security processing such as discovering, scanning, monitoring or auditing is completed on a target object.

The implementation process that the function module reports the registration information and the function module reports the operating state information may include the following steps.

At step 1: the network function module and the security function module in the function module submit the registration information, for registering into the network function management module and the security function management module in the SASE orchestration support layer.

At step 2: the network function management module in the SASE orchestration support layer processes the registration information sent by the network function module and generates registration information of the network function module that is retrievable by the service orchestration module in the SASE orchestration support layer. The security function management module processes the registration information sent by the security function module and generates registration information of the security function module that is retrievable by the service orchestration module in the SASE orchestration support layer.

At step 3: the network function management module in the SASE orchestration support layer monitors the operating state information of the network function module in the function module and sends the operating state information to the service orchestration module in the SASE orchestration support layer. The security function management module monitors the operating state information of the security function module in the function module and sends the operating state information to the service orchestration module in the SASE orchestration support layer. The service orchestration module in the SASE orchestration support layer may also send the registration information and the operating state information to the SASE management presentation layer.

The implementation process that the SASE orchestration support layer constructs the first sequence based on the user strategy may include the following steps.

At step 1: the SASE management presentation layer sends the user strategy to the SASE orchestration support layer.

At step 2: the service orchestration module in the SASE orchestration support layer obtains a plurality of function module identifiers by analyzing the user strategy, retrieving a preset correspondence between types of network function modules, types of security function modules, and function module identifiers, and selecting a function module identifier that corresponds to each function tag. The service orchestration module generates a first sequence based on the plurality of function tags and the plurality of function module identifiers, and sends the first sequence to the network function management module and the security function management module in the SASE orchestration support layer.

In this case, if the user strategy includes both the source address tag and the destination address tag, it is determined that the type of the user strategy is the first preset type. If the user strategy includes only the assets address tag, it is determined that the type of the user strategy is the second preset type. If the user strategy does not conform to either of the above two types, a format error is determined and reported, and the process is terminated. The first preset type may refer to the user strategy being a traffic-oriented user strategy, the second preset type may refer to the user strategy being a non-traffic-oriented user strategy.

When it is determined that that the type of the user strategy is the first preset type, the first sequence is obtained based on the user strategy. The first sequence carries the order information of the plurality of function modules performing the network function and the security function desired by the user.

In this case, the first sequence that carries the order information may be: [{(DPI, function module identifier), (Filter, function module identifier)}, (Encryption, function module identifier)].

The elements in the symbol [] should be executed strictly in the order, i.e., the functions involving in a message content, such as the DPI corresponding to the security function and the Filter corresponding to the network function, should be executed before the Encryption corresponding to the security function. The part in the symbol {} is not related to the order, i.e., the functions involving in the message content, such as DPI corresponding to the security function and Filter corresponding to the network function, are executed without any order. The part in () includes the type of the network function or security function, followed by a specific function module identifier.

It should be noted that the function module identifier may also be replaced with the identifier of the network function module and/or the identifier of the security function module set in the function module.

That is, the first sequence that carries the order information may also be: [{(DPI, function module ID1), (Filter, function module ID2)}, (Encryption, function module ID3)].

In this case, as shown in Table 6, the service orchestration module in the SASE orchestration support layer may send the first sequence and the security function strategy in the user strategy to the network function management module.

**Table 6**

| |
|---|
| ```
            <ProcessingSequence>
            "[(DPI, function module ID1), (Filter, function module ID2), (Encryption, function
       module ID3)]"
            </ ProcessingSequence>
            <NetworkStrategy>
            <DPI>
                < SourceAddress >*</ SourceAddress >
            </DPI>
            </NetworkStrategy>
``` |

In this case, as shown in Table 7, the service orchestration module in the SASE orchestration support layer may send the first sequence and the network function strategy in the user strategy to the security function management module.

**Table 7**

| |
|---|
| ```
            <ProcessingSequence>
            "[(DPI, function module ID1), (Filter, function module ID2), (Encryption, function
       module ID3)]"
            </ ProcessingSequence>
            <NetworkStrategy>
            <DPI>
                < SourceAddress >*</ SourceAddress >
            </DPI>
            </NetworkStrategy>
 
``` |

Table 8 is a schematic illustration of a traffic-oriented user strategy. As shown in Table 8, the sample user strategy includes SourceAddress and DestinationAddress, thus the user strategy is a traffic-oriented user strategy. SourceAddress refers to the source address. DestinationAddress refers to the destination address. The meaning of the traffic-oriented user strategy includes "a source address IP:", "a port to destination IP:", all protocol types of the port, "network function processing to be performed: performing a DPI strategy on all traffic", "security function processing be performed: performing traffic filtering and drop strategy on messages without limiting ports at the source address 192.168.0.23", and performing encryption strategy on all traffic.

**Table 8**

| |
|---|
| ```
           <SourceAddress>source address IP: port</SourceAddress>
           <DestinationAddress>destination address IP: port</DestinationAddress>
           < ProtocolType >*</ Protocol Type >
           <NetworkStrategy>
              <DPI>
                < SourceAddress >*</ SourceAddress >
              </DPI>
           </NetworkStrategy>
           <Security Strategy>
              <Filter>
                < SourceAddress >192.168.0.23:*</ SourceAddress >
                <Action>drop</Action>
              </ Filter >
              < Encryption >
                < SourceAddress >*</ SourceAddress >
              </ Encryption >
           </SecurityStrategy>
 
``` |

When it is determined that that the type of the user strategy is the second preset type, the first sequence is obtained based on the user strategy. The first sequence does not carry the order information of the plurality of function modules performing the network function and the security function desired by the user.

In this case, the first sequence that does not carry the order information may be: [{(DPI, function module identifier), (Filter, function module identifier)}, (Encryption, function module identifier)].

It should be noted that the function module identifier may also be replaced with the identifier of the network function module and/or the identifier of the security function module set in the function module.

That is, the first sequence that does not carry the order information may also be: [{(DPI, function module ID1), (Filter, function module ID2)}, (Encryption, function module ID3)].

In this case, the network function management module in the SASE orchestration support layer receives the first sequence and sends the first sequence to a network function module in the corresponding function module, realizing the forwarding scheduling of the user traffic and the network optimization processing, and summarizing the result of the network strategy processing by realizing the traffic forwarding based on the first sequence.

In this case, the security function management module receives the first sequence and sends the first sequence to a security function module in the corresponding function module, realizing the security processing of the user traffic and summarizing the result of the security strategy processing.

At step 3: the network function management module in the SASE orchestration support layer summarizes the result that the function module executes the first sequence and feeds back the result to the SASE management presentation layer. The security function management module in the SASE orchestration support layer summarizes the result that the function module executes the first sequence and feeds back the result to the SASE management presentation layer.

The implementation process that the function module executes the first sequence may include the following steps.

At step 1: the traffic-oriented security function module in the function module needs the network function module to perform route forwarding based on the first sequence to divert the user traffic, thus the execution process also includes that the network function module executes the first sequence to divert the user traffic. The network function module in the function module diverts the user traffic to the next function module based on the first sequence, and diverts the user traffic finally to the target resource, and feeds back a processing result to the network function management module in the SASE orchestration support layer.

At step 2: the traffic-oriented security function module in the function module executes the first sequence, processes the user traffic to be forwarded, and feeds back the processing result to the security function management module in the SASE orchestration support layer. The network function management module in the SASE orchestration support layer summarizes the processing result of executing the first sequence and feeds back the summarized result to the SASE management presentation layer. The security function management module summarizes the processing result and feeds back the summarized result to the SASE management presentation layer.

The implementation process that the function module executes the first sequence may include the following steps.

At step 1: the non-traffic-oriented security function module in the function module receives the first sequence and executes the first sequence in a non-traffic-oriented manner.

At step 2: the security function module in the function module feeds back the processing result to the security function management module in the SASE orchestration support layer. The security function management module summarizes an execution result and feeds back the summarized execution result to the SASE management presentation layer.

It should be noted that the process of executing the first sequence by the network function module in the function module is similar to the process of executing the first sequence by the traffic-oriented security function module in the function module.

In order to realize the method for function orchestration in the embodiments of the disclosure, the embodiments of the disclosure further provide an apparatus for function orchestration. FIG. 4 is a structural block diagram illustrating an apparatus for function orchestration according to an embodiment of the disclosure. As shown in FIG. 4, the apparatus includes an obtaining unit 41 and a processing unit 42.

The obtaining unit 41 is configured to obtain a user strategy; in which the user strategy indicates a network function and/or a security function desired by a user.

The processing unit 42 is configured to obtain a first sequence based on the user strategy; and send the first sequence.

In an embodiment, obtaining the first sequence includes: obtaining a first sequence that includes a network function module and/or a security function module, by analyzing the user strategy and selecting the network function module and/or the security function module.

In an embodiment, the processing unit 42 is specifically configured to: obtain the first sequence, by determining an identifier of each module in the first sequence based on at least one of: a description of a network function module, a description of a security function module, a module identifier, or a plurality of function descriptions in the user strategy; in which the function descriptions in the user strategy indicate a description of the network function desired by the user and/or a description of the security function desired by the user.

In an embodiment, the apparatus is further configured to: receive registration information sent by a plurality of function modules, in which the registration information carries at least one of: identifier information of each function module, a description of a network function supported for execution, or a description of a security function supported for execution.

In an embodiment, the processing unit 42 is specifically configured to: obtain the first sequence based on the user strategy and a preset rule.

In an embodiment, the processing unit 42 is specifically configured to: determine a plurality of function modules, based on at least one of: a description of a network function module, a description of a security function module, a module identifier, or a plurality of function descriptions in the user strategy; and obtain the first sequence based on the preset rule.

In an embodiment, the processing unit 42 is specifically configured to: obtain the first sequence, by selecting and/or sorting the plurality of function modules based on the preset rule.

In an embodiment, the apparatus is specifically configured to: receive operating state information sent by the plurality of function modules; obtaining the first sequence based on the preset rule includes: obtaining the first sequence, by selecting the plurality of function modules based on the operating state information.

In an embodiment, the processing unit 42 is specifically configured to: obtain the first sequence based on at least one of network topology, network latency, or load balancing of network traffic.

In an embodiment, the processing unit 42 is specifically configured to: obtain a source address and a destination address in the user strategy; and obtain the first sequence based on at least one of the network topology, the network latency, or the load balancing of network traffic.

In an embodiment, the first sequence matches some or all of forwarding paths determined based on the source address and the destination address.

In an embodiment, the processing unit 42 is specifically configured to: obtain an assets address in the user strategy; and obtain the first sequence based on at least one of the network topology, the network latency, or the load balancing of network traffic.

In an embodiment, some or all of the function modules indicated in the first sequence are function modules reachable to the assets address via a network.

In an embodiment, the processing unit 42 is specifically configured to: send the first sequence and a strategy corresponding to each function module in the first sequence, in which the strategy corresponding to each function module is obtained based on the user strategy.

In practical application, the obtaining unit 41 may be implemented by a communication interface in the apparatus for function orchestration; the processing unit 42 may be implemented by a processor in the apparatus for function orchestration.

It should be noted that the apparatus for function orchestration provided in the above embodiments, when performing function orchestration, is only exemplified by the division of the program modules described above. In practical application, the above processing may be assigned to be completed by different program modules as needed, i.e., the internal structure of the apparatus may be divided into different program modules to complete all or part of the processing described above. In addition, the apparatus for function orchestration provided in the above embodiment belongs to a same concept as the embodiments of the method for function orchestration, and the specific implementation process is described in detail in the method embodiments, which is not repeated herein.

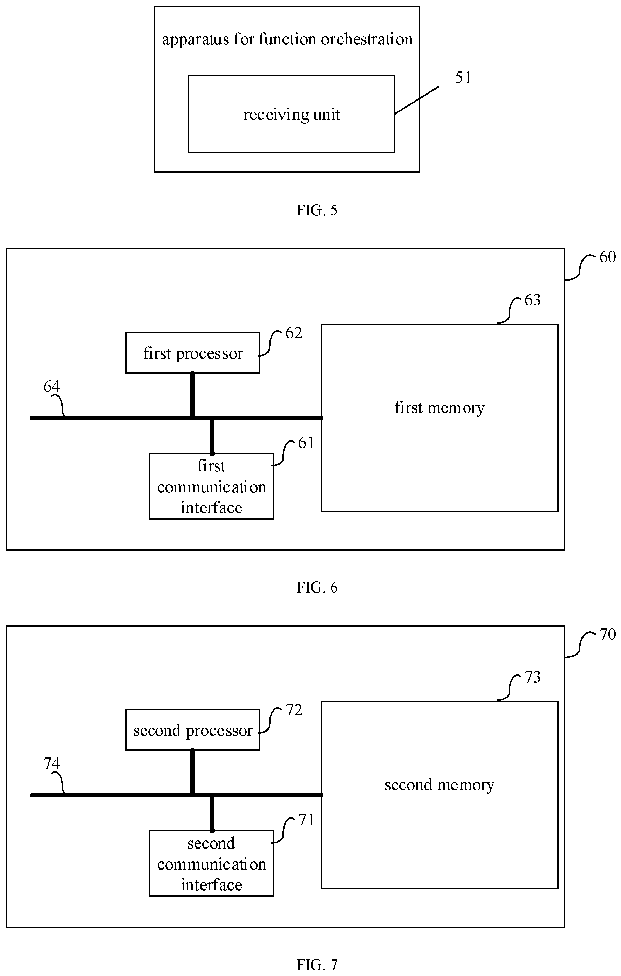

In order to realize the method for function orchestration in the embodiments of the disclosure, the embodiments of the disclosure further provide an apparatus for function orchestration. FIG. 5 is a structural block diagram illustrating an apparatus for function orchestration according to an embodiment of the disclosure. As shown in FIG. 5, the apparatus includes a receiving unit 51.

The receiving unit 51 is configured to receive a first sequence, in which the first sequence is obtained based on a user strategy, the user strategy indicates a network function and/or a security function desired by a user.

In an embodiment, the apparatus is further configured to: send registration information, in which the registration information carries at least one of: identifier information of each function module, a description of a network function supported for execution, or a description of a security function supported for execution.

In an embodiment, the apparatus is further configured to: send operating state information, in which the operating state information is configured to obtain the first sequence by selecting a plurality of function modules based on the operating state information.

In an embodiment, the receiving unit 51 is specifically configured to: receive the first sequence and a strategy corresponding to a function module, in which the strategy corresponding to the function module is obtained based on the user strategy.

In practical application, the receiving unit 51 may be realized by a communication interface in the apparatus for function orchestration.

It should be noted that the apparatus for function orchestration provided in the above embodiments, when performing function orchestration, is only exemplified by the division of the program modules described above. In practical application, the above processing may be assigned to be completed by different program modules as needed, i.e., the internal structure of the apparatus may be divided into different program modules to complete all or part of the processing described above. In addition, the apparatus for function orchestration provided in the above embodiment belongs to a same concept as the embodiments of the method for function orchestration, and the specific implementation process is described in detail in the method embodiments, which is not repeated herein.

Embodiments of the disclosure further provide a device. As shown in FIG. 6, the device includes a first communication interface 61, a first processor 62, a first memory 63 and a bus system 64.

The first communication interface 61 is capable of performing information interaction with other devices.

The first processor 62 is connected to the first communication interface 61, configured to execute the method provided by one or more technical solutions on the device side as described above when a computer program is executed. The computer program is stored on the first memory 63.

It should be noted that the specific processes of the first processor 62 and the first communication interface 61 are detailed in the method embodiments and are not repeated herein.

In practical application, the components in the device 60 are coupled together via the bus system 64. It should be understood that the bus system 64 is configured to realize the connection communication between the components. The bus system 64 includes a power bus, a control bus, and a state signal bus in addition to a data bus. However, for clarity of illustration, the various buses are labeled as the bus system 64 in FIG. 6.

In embodiments of the disclosure, the first memory 63 is configured to store various types of data to support the operation of the device 60. Examples of such data include any computer program configured to operate on the device 60.

The method disclosed in embodiments of the disclosure may be applied to the first processor 62 or implemented by the first processor 62. The first processor 62 may be an integrated circuit chip with a signal processing capability. In an implementation process, each step of the above method may be completed by an integrated logic circuit in the form of hardware or instructions in the form of software in the first processor 62. The first processor 62 above may be a general processor, a digital signal processor (DSP), or other programmable logic devices, discrete gate or transistor logic devices, discrete hardware components, and the like. The first processor 62 may implement or execute the methods, steps and logic blocks disclosed in embodiments of the disclosure. The general processor may be a microprocessor or any conventional processor, etc. The steps of the method disclosed in embodiments of the disclosure may be executed and completed by a hardware decoding processor which is embodied directly, or executed and completed by a combination of hardware and software modules in the decoding processor. The software module may be located in a storage medium. The storage medium is located in the first memory 63. The first processor 62 reads the information in the first memory 63, and completes the steps of the above method in combination with the hardware.

Embodiments of the disclosure further provide a device. As shown in FIG. 7, the device includes a second communication interface 71, a second processor 72, a second memory 73 and a bus system 74.

The second communication interface 71 is capable of performing information interaction with other devices;
The second processor 72 is connected to the second communication interface 71, configured to execute the method provided by one or more technical solutions on the device side as described above when a computer program is executed. The computer program is stored on the second memory 73.

It should be noted that the specific processes of the second processor 72 and the second communication interface 71 are detailed in the method embodiments and are not repeated herein.

In practical application, the components in the device 70 are coupled together via the bus system 74. It should be understood that the bus system 74 is configured to realize the connection communication between the components. The bus system 74 includes a power bus, a control bus, and a state signal bus in addition to a data bus. However, for clarity of illustration, the various buses are labeled as the bus system 74 in FIG. 7.

In embodiments of the disclosure, the second memory 73 is configured to store various types of data to support the operation of the device 70. Examples of such data include any computer program configured to operate on the device 70.

The method disclosed in embodiments of the disclosure may be applied to the second processor 72 or implemented by the second processor 72. The second processor 72 may be an integrated circuit chip with a signal processing capability. In an implementation process, each step of the above method may be completed by an integrated logic circuit in the form of hardware or instructions in the form of software in the second processor 72. The second processor 72 above may be a general processor, a DSP, or other programmable logic devices, discrete gate or transistor logic devices, discrete hardware components, and the like. The second processor 72 may implement or execute the methods, steps and logic blocks disclosed in embodiments of the disclosure. The general processor may be a microprocessor or any conventional processor, etc. The steps of the method disclosed in embodiments of the disclosure may be executed and completed by a hardware decoding processor which is embodied directly, or executed and completed by a combination of hardware and software modules in the decoding processor. The software module may be located in a storage medium. The storage medium is located in the second memory 73. The second processor 72 reads the information in the second memory 73, and completes the steps of the above method in combination with the hardware.

In an exemplary embodiment, the device 60 and the device 70 may be implemented by one or more application specific integrated circuits (ASICs), DSPs, programmable logic devices (PLDs), complex programmable logic devices (CPLDs), field-programmable gate arrays (FPGAs), general-purpose processors, controllers, micro controller units (MCUs), microprocessors, or other electronic component, for executing the above method.

It may be understood that, the memories (the first memory 63, and the second memory 73) of embodiment of the disclosure may be volatile or nonvolatile memories, and may also include both the volatile and nonvolatile memories. The nonvolatile memory may be a read only memory (ROM), a programmable read only memory (PROM), an erasable programmable read only memory (EPROM), an electrically erasable programmable read-only memory (EEPROM), a ferromagnetic random access memory (FRAM), a flash memory, a magnetic surface memory, an optical disk, or a compact disc read-only memory (CD-ROM). The magnetic surface memory may be a magnetic disk memory or a magnetic tape memory. The volatile memory may be a random access memory (RAM), which is used as an external cache. By way of illustration, but not limitation, a plurality of forms of RAMs are available, such as a static random access memory (SRAM), a synchronous static random access memory (SSRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a syncLink dynamic random access memory (SLDRAM), and a direct rambus random access memory (DRRAM). The memories described in embodiments of the disclosure are intended to include, but not limited to, these and any other suitable types of memories.

In an exemplary embodiment, embodiments of the disclosure also provide a storage medium, that is, a computer storage medium, specifically a computer-readable storage medium. For example, the storage medium includes the memory storing the computer program. The above computer program may be executed by the first processor 62 of the device 60 to complete the steps of the method in the first terminal side. The computer-readable storage medium may be a memory such as the FRAM, the ROM, the PROM, the EPROM, the EEPROM, the flash memory, the magnetic surface memory, the optical disk, the CD-ROM or the like.

It should be noted that, the term "first" and "second" are used to distinguish similar objects, and are not necessarily used to describe a specific order or sequence.

In addition, the technical solutions described in embodiments of the disclosure may be arbitrarily combined without conflict.

The above is only preferable embodiments of the disclosure, and is not used to limit the protection scope of the disclosure.

## Claims

1. A method for function orchestration, comprising:
obtaining a user strategy, wherein the user strategy indicates a network function and/or a security function desired by a user;
obtaining a first sequence based on the user strategy; and
sending the first sequence.

2. The method according to claim 1, wherein obtaining the first sequence comprises:
obtaining a first sequence that comprises a network function module and/or a security function module, by analyzing the user strategy and selecting the network function module and/or the security function module.

3. The method according to claim 1 or 2, wherein obtaining the first sequence based on the user strategy comprises:
obtaining the first sequence, by determining an identifier of each module in the first sequence based on at least one of: a description of a network function module, a description of a security function module, a module identifier, or a plurality of function descriptions in the user strategy;
wherein the function descriptions in the user strategy indicate a description of the network function desired by the user and/or a description of the security function desired by the user.

4. The method according to any one of claims 1 to 3, further comprising:
receiving registration information sent by a plurality of function modules, wherein the registration information carries at least one of: identifier information of each function module, a description of a network function supported for execution, or a description of a security function supported for execution.

5. The method according to claim 1, wherein obtaining the first sequence based on the user strategy comprises:
obtaining the first sequence based on the user strategy and a preset rule.

6. The method according to claim 5, wherein obtaining the first sequence based on the user strategy and the preset rule comprises:
determining a plurality of function modules, based on at least one of: a description of a network function module, a description of a security function module, a module identifier, or a plurality of function descriptions in the user strategy; and
obtaining the first sequence based on the preset rule.

7. The method according to claim 6, wherein obtaining the first sequence based on the preset rule comprises:
obtaining the first sequence, by selecting and/or sorting the plurality of function modules based on the preset rule.

8. The method according to claim 6 or 7, further comprising:
receiving operating state information sent by the plurality of function modules;
wherein obtaining the first sequence based on the preset rule comprises:
obtaining the first sequence, by selecting the plurality of function modules based on the operating state information.

9. The method according to claim 6 or 7, wherein obtaining the first sequence based on the preset rule comprises:
obtaining the first sequence based on at least one of network topology, network latency, or load balancing of network traffic.

10. The method according to claim 9, wherein obtaining the first sequence based on at least one of the network topology, the network latency, or the load balancing of network traffic comprises:
obtaining a source address and a destination address in the user strategy; and
obtaining the first sequence based on at least one of the network topology, the network latency, or the load balancing of network traffic.

11. The method according to claim 10, wherein the first sequence matches some or all of forwarding paths determined based on the source address and the destination address.

12. The method according to claim 9, wherein obtaining the first sequence based on at least one of the network topology, the network latency, or the load balancing of network traffic comprises:
obtaining an assets address in the user strategy; and
obtaining the first sequence based on at least one of the network topology, the network latency, or the load balancing of network traffic.

13. The method according to claim 12, wherein some or all of the function modules indicated in the first sequence are function modules reachable to the assets address via a network.

14. The method according to claim 1, wherein sending the first sequence comprises:
sending the first sequence and a strategy corresponding to each function module in the first sequence, wherein the strategy corresponding to each function module is obtained based on the user strategy.

15. A method for function orchestration, comprising:
receiving a first sequence, wherein the first sequence is obtained based on a user strategy, and the user strategy indicates a network function and/or a security function desired by a user.

16. The method according to claim 15, further comprising:
sending registration information, wherein the registration information carries at least one of: identifier information of each function module, a description of a network function supported for execution, or a description of a security function supported for execution.

17. The method according to claim 15, further comprising:
sending operating state information, wherein the operating state information is configured to obtain the first sequence by selecting a plurality of function modules based on the operating state information.

18. The method according to claim 15, wherein receiving the first sequence comprises:
receiving the first sequence and a strategy corresponding to a function module, wherein the strategy corresponding to the function module is obtained based on the user strategy.

19. An apparatus for function orchestration, comprising:
an obtaining unit, configured to obtain a user strategy; wherein the user strategy indicates a network function and/or a security function desired by a user; and
a processing unit, configured to obtain a first sequence based on the user strategy; and send the first sequence.

20. An apparatus for function orchestration, comprising:
a receiving unit, configured to receive a first sequence,
wherein the first sequence is obtained based on a user strategy, the user strategy indicates a network function and/or a security function desired by a user.

21. A device, comprising a processor and a memory configured to store a computer program capable of running on the processor,
wherein the processor is configured to perform steps of the method according to any one of claims 1 to 14 when the computer program is executed.

22. A device, comprising a processor and a memory configured to store a computer program capable of running on the processor,
wherein the processor is configured to perform steps of the method according to any one of claims 15 to 18 when the computer program is executed.

23. A computer-readable storage medium having stored a computer program that, when executed by a processor, implements steps of the method according to any one of claims 1 to 14, or steps of the method according to any one of claims 15 to 18.
